# FASCICULE DE BREVET EUROPEEN

(11) **EP 3 934 854 B1**
(45) Date de publication et mention de la délivrance du brevet: **01.03.2023**
(21) Numéro de dépôt: 20725836.9
(22) Date de dépôt: 05.03.2020
(51) Int. Cl.: B25H 7/00, B44B 3/00

(54) **SYSTEME DE MARQUAGE PAR MICROPERCUSSION AVEC RFID**
MIKROPERKUSSIONSMARKIERUNGSSYSTEM MIT RFID
MICROPERCUSSION MARKING SYSTEM WITH RFID

(30) Priorité: 05.03.2019 FR 1902254
(43) Date de publication de la demande: 12.01.2022
(73) Titulaire: Technomark International, 42350 La Talaudiere (FR)
(72) Inventeur: BAUD, Laurent, Albert, Paul, 75011 PARIS (FR); JACOB, Stéphane, Noel, 42800 GENILAC (FR)
(74) Mandataire: Weber, Jean-François
(86) Numéro de dépôt international: PCT/FR2020/050450
(87) Numéro de publication internationale: WO 2020/178531

(56) Documents cités:
- EP-A1- 1 852 760
- DE-A1-102008 025 104
- FR-A1- 3 029 443
- US-A1- 2014 184 397
- US-A1- 2019 026 510

## Description

### DOMAINE TECHNIQUE

La présente invention concerne le domaine général du marquage à micropercussion, et plus précisément la réalisation de marquage à micropercussion afin d'inscrire un ou plusieurs signes sur un composant, par exemple un composant industriel.

Plus particulièrement, l'invention concerne un système de marquage selon le préambule de la revendication 1, comprenant au moins une machine de marquage par micropercussion.

L'invention concerne également un procédé de fabrication d'un tel système de marquage selon le préambule de la revendication 10, ainsi qu'un procédé de réglage d'une machine de marquage par micropercussion selon le préambule de la revendication 11.

Un tel système, un tel procédé de fabrication et un tel procédé de réglage sont connus du document FR 3 029 443 A1.

### TECHNIQUE ANTERIEURE

Il est connu de mettre en oeuvre des systèmes de marquage comprenant une machine de marquage par micropercussion fixe près de laquelle une pièce à marquer est amenée, ou une machine de marquage portable par micropercussion qu'un opérateur va manipuler pour l'amener près d'une pièce à marquer.

Ces systèmes de marquage connus comprennent généralement chacun une machine de marquage respective et un boîtier de commande respectif, lequel est relié à la machine soit via une liaison filaire et situé à distance de cette dernière, soit monté directement sur la machine de marquage, et embarqué par cette dernière dans le cas d'une machine de marquage portable.

Le fonctionnement de ces systèmes de marquage de l'art antérieur est bien connu des opérateurs, qui entrent et contrôlent, via le boîtier de commande, l'ensemble des données de marquage à transmettre à la machine de marquage, par exemple un numéro de série à marquer, des paramètres de configuration machine, etc.

Ces systèmes dédiés au marquage par micropercussion, bien que donnant globalement satisfaction dans leur utilisation, n'en présentent pas moins certains inconvénients.

Ainsi, ces systèmes de marquage par micropercussion connus présentent des limitations importantes en termes d'interfaçage entre le boîtier de commande et la machine de marquage. Lorsqu'un opérateur désire modifier ou renouveler les données de marquage ou les paramètres de configuration de la machine de marquage, la conception des systèmes de marquage connus rend nécessaire de procéder à une ou plusieurs saisies via le boîtier de commande, et ce bien souvent par un opérateur devant rentrer toutes les données voulues seul, ou plusieurs opérateurs présentant différentes qualifications et/ou habilitations, par exemple un premier opérateur qui va modifier la force de percussion de la machine en regard du matériau à marquer, et un second opérateur qui va renseigner la machine sur un motif à marquer, tandis qu'un autre opérateur devra s'assurer que pendant tout le processus de paramétrage, chaque machine de marquage est associée au bon boîtier et inversement. Une telle configuration de système de marquage nécessite donc un personnel nombreux et/ou qualifié et une durée de mise en oeuvre importante, tout en multipliant le risque d'erreur, puisque l'opérateur seul peut facilement se tromper quant à l'une des multiples données qu'il doit rentrer, tandis que la pluralité d'opérateurs augmente l'hétérogénéité des enregistrements et des compétences.

Ainsi, ces systèmes de marquage connus peuvent entraîner des erreurs de manipulation importantes de la part des opérateurs, par exemple lorsqu'un opérateur non qualifié paramètre lui-même la machine de marquage via le boîtier pour gagner du temps et éviter de faire appel à un opérateur habilité non immédiatement disponible. Plus grave encore, le risque de se tromper de machine de marquage et/ou de boîtier augmente considérablement dès lors qu'il y a une pluralité de machines de marquage et donc une pluralité de boîtiers associés sur un même site, ainsi qu'une pluralité d'opérateurs et/ou d'instructions de marquage, ce risque étant encore accentué lorsque les machines de marquage sont portatives, puisqu'il est facile d'intervertir deux machines.

De plus, ces systèmes de marquage connus présentent le risque d'associer une machine de marquage avec le mauvais boîtier, et donc de donner au boîtier des instructions de marquage irréalisables ou non satisfaisantes par la machine (c'est-à-dire ne présentant pas la qualité ou la vitesse attendue par exemple). Le raisonnement est le même, *mutatis mutandis,* en ce qui concerne l'association d'une machine de marquage et d'un accessoire amovible qui peut être monté sur celle-ci. Même en associant un boîtier de commande avec une machine de marquage convenable, les systèmes de marquage connus présentent un risque non négligeable pour leurs opérateurs de générer des configurations machine inadaptées, par exemple en associant à une machine un accessoire inapproprié pour la configuration rentrée, ou encore en enregistrant dans une machine une configuration machine qui est inadéquate pour un certain type de marquage, pour un certain type de pièce à marquer, pour la machine elle-même, ou encore tout simplement en raison d'erreurs humaines de configuration.

En résumé, il est particulièrement difficile, avec les systèmes de marquage connus, d'associer systématiquement la bonne machine de marquage avec le bon boîtier, le bon opérateur, des instructions de marquage correctes et/ou une configuration machine exacte.

Les systèmes de marquage connus présentent de plus un faible niveau d'interopérabilité, puisqu'il est nécessaire de paramétrer chaque machine selon son propre boîtier de commande et ses propres paramètres machine, à l'aide d'un ou plusieurs opérateurs habilités.

Ainsi, même si des systèmes de marquage sont connus et réalisables en tant que tels, les inconvénients mentionnés ci-avant démontrent qu'ils ne sont pas adaptés à une utilisation rapide, pratique, efficiente et évolutive d'une ou plusieurs machines de marquage.

En définitive, les systèmes de marquage par micropercussion connus sont particulièrement coûteux, complexes et longs à régler entre chaque marquage et par chaque opérateur, et présentent en outre un risque élevé d'erreur de marquage. Ils demandent de plus de mobiliser une main d'oeuvre qualifiée nombreuse. Enfin, les systèmes de marquage par micropercussion connus sont difficilement modulables de sorte qu'ils présentent un caractère évolutif relativement faible, et ils sont donc difficiles à utiliser en synergie ou en combinaison les uns avec les autres, leurs éléments respectifs étant rarement interchangeables et/ou avec un risque d'erreur élevé.

### EXPOSE DE L'INVENTION

Les objets assignés à la présente invention visent en conséquence à remédier aux différents inconvénients énumérés précédemment et à proposer un nouveau système de marquage qui, tout en étant particulièrement efficient, est particulièrement simple à mettre en oeuvre, peu coûteux et modulable à volonté.

Un autre objet de l'invention vise à proposer un nouveau système de marquage particulièrement facile à adapter à une machine de marquage nouvelle ou préexistante, fixe ou mobile.

Un autre objet de l'invention vise à proposer un nouveau système de marquage capable de marquer efficacement par micropercussion une grande quantité de composants avec un risque d'erreur de marquage extrêmement faible, et ce même dans un cours laps de temps.

Un autre objet de l'invention vise à proposer un nouveau système de marquage à la fois fiable et compétitif sur le plan économique.

Un autre objet de l'invention vise à proposer un nouveau système de marquage n'autorisant l'usage qu'à des opérateurs habilités et des configurations de marquage appropriées.

Un autre objet de l'invention vise à proposer un nouveau système de marquage permettant d'adapter le marquage spécifiquement à un opérateur, à son niveau d'habilitation et/ou ses fonctions.

Un autre objet de l'invention vise à proposer un nouveau système de marquage particulièrement adapté aux grandes cadences de marquage.

Un autre objet de l'invention vise à proposer un nouveau système de marquage permettant de paramétrer rapidement et sans risque d'erreur une machine de marquage.

Un autre objet de l'invention vise à proposer un nouveau système de marquage dont la conception lui assure un fonctionnement particulièrement flexible et facile à faire évoluer selon les besoins des opérateurs.

Un autre objet de l'invention vise à proposer un nouveau système de marquage nécessitant peu d'entretien et une main d'oeuvre réduite ou au moins une main d'oeuvre qualifiée réduite.

Un autre objet de l'invention vise à proposer un nouveau système de marquage particulièrement efficace et adapté pour le marquage de composants industriels.

Un autre objet de l'invention vise à proposer un nouveau système de marquage permettant d'optimiser la gestion de l'habilitation d'un opérateur, ainsi que de renforcer globalement la gestion de la sécurité d'une machine de marquage.

Un autre objet de l'invention vise à proposer un nouveau système de marquage particulièrement facile à installer au sein d'une structure ou installation industrielle en construction ou préexistante.

Un autre objet de l'invention vise à proposer un nouveau système de fabrication d'un système de marquage qui soit à la fois simple, peu coûteux, rapide et facile à mettre en oeuvre avec un nombre limités d'éléments différents.

Un autre objet de l'invention vise à proposer un nouveau procédé de réglage d'une machine de marquage facile à mettre en oeuvre, et qui permet une amélioration de la vitesse de réglage, c'est-à-dire de paramétrage, de la machine, tout en garantissant une diminution significative du risque d'erreur de marquage et/ou de paramétrage machine.

Les objets assignés à l'invention sont atteints à l'aide d'un système de marquage selon la revendication 1.

Les objets assignés à l'invention sont également atteints à l'aide d'un procédé de fabrication d'un système de marquage selon la revendication 10.

Les objets assignés à l'invention sont en outre atteints à l'aide d'un procédé de réglage d'une machine de marquage par micropercussion selon la revendication 11.

### DESCRIPTIF SOMMAIRE DES DESSINS

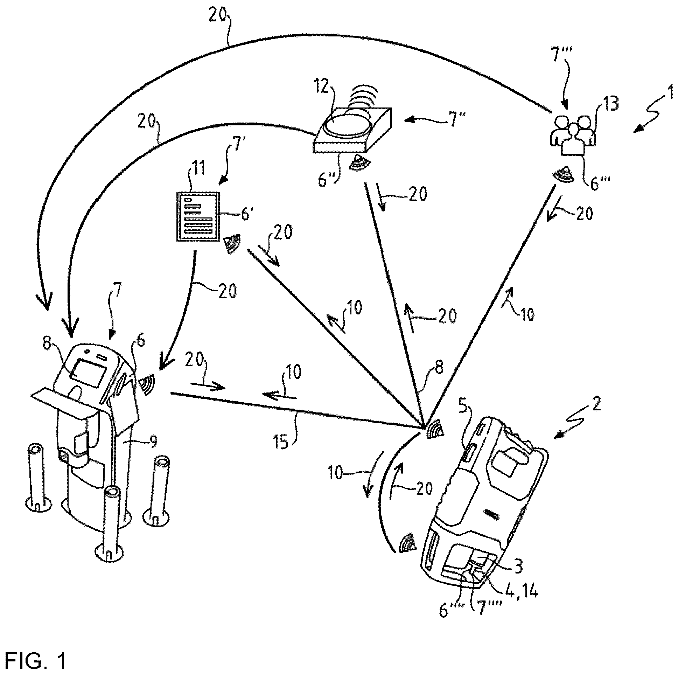

D'autres particularités et avantages de l'invention apparaîtront et ressortiront plus en détails à la lecture de la description faite ci-après, en référence au dessin annexé, donné uniquement à titre d'exemple illustratif et non limitatif, dans lequel figure 1 est une illustration schématique simplifiée d'un système de marquage avec plusieurs possibilités de fonctions RFID selon l'invention.

Comme illustré à la figure 1, l'invention concerne, selon un premier aspect, un système de marquage 1. Bien évidemment, le système de marquage 1 est de préférence destiné à marquer par micropercussion au moins une pièce à marquer, par exemple un composant ou un produit industriel, de manière à la déformer pour y inscrire au moins un signe qui est lui-même avantageusement destiné à fournir une identification pour distinguer ladite pièce marquée d'autre pièces également marquées (préférentiellement également grâce au même système 1), ou encore grouper plusieurs pièces entre elles portant le ou les mêmes signes. Le système de marquage 1 est ainsi conçu de manière préférentielle pour déformer plastiquement par micropercussion tout type de pièce à marquer appropriée, par exemple un composant en métal, en polymère, en bois, ou tout autre matériau approprié.

### MEILLEURE MANIERE DE REALISER L'INVENTION

Selon l'invention, comme illustré à la figure 1, le système de marquage 1 comprend au moins une machine de marquage par micropercussion 2. De préférence, le système de marquage comprend une pluralité de machine de marquage par micropercussion 2 sensiblement similaires, c'est-à-dire équipées de la même façon que ce qui est décrit ci-après.

De manière préférentielle, ladite machine de marquage 2 comprend une tête de marquage 3 munie d'un poinçon mobile 4, lequel est destiné à percuter une pièce à marquer de manière à déformer cette dernière pour y inscrire au moins un signe, et éventuellement une pluralité de signes consécutifs, le ou les signes formant par exemple un ou des numéros de série, inscriptions, marques, logos, caractères alphanumériques, motifs ornementaux, symboles d'identification, marquages-codages matriciels en deux dimensions notamment de type Data Matrix^{®}, etc.

Selon l'invention, le système de marquage 1 comprend en outre au moins :
- un premier moyen RFID (identification par radiofréquence) 5 équipant ladite machine de marquage 2, et
- un second moyen RFID 6, 6', 6", 6‴, 6"" équipant un dispositif distinct 7, 7', 7", 7‴, 7"" de ladite machine de marquage 2.

Le système de marquage 1 comprend avantageusement ledit dispositif distinct 7, 7', 7", 7‴, 7"", qui fait donc préférentiellement partie du système de marquage 1 de l'invention.

Le terme « *RFID* » signifie avantageusement « *identification par radiofréquence* », « *radio-identification* » ou encore « *radio-frequency identification* », et désigne préférentiellement une technologie de mémorisation et de récupération de données à distance à l'aide d'éléments parfois appelés « *radio-étiquettes* », « *marqueurs* », ou *RFID tags* ».

Par exemple, ledit premier moyen RFID 5 est une étiquette RFID, ledit second moyen RFID 6, 6', 6", 6‴, 6"" étant un lecteur RFID, ou inversement, ledit second moyen RFID 6, 6', 6", 6‴, 6"" est une étiquette RFID, ledit premier moyen RFID 5 étant un lecteur RFID.

Selon un mode de réalisation particulier illustré à la figure 1, ledit premier moyen RFID 5 est embarqué par ladite machine de marquage par micropercussion 2, et il est par exemple intégré au sein de cette dernière. Alternativement, ledit premier moyen RFID 5 est fixé (c'est-à-dire solidarisé) sur ladite machine de marquage 2. De la même manière, ledit second moyen RFID 6, 6', 6", 6'", 6"" peut être embarqué par ledit dispositif distinct 7, 7', 7", 7‴, 7"", et/ou il est par exemple intégré au sein de ce dernier, en tout ou en partie. Alternativement, ledit second moyen RFID 6, 6', 6", 6'", 6"" est fixé (c'est-à-dire solidarisé) sur ledit dispositif distinct 7, 7', 7", 7‴, 7ʺʺ.

Selon l'invention, ledit premier moyen RFID 5 est conçu pour transmettre des premières informations 10 audit second moyen RFID 6, 6', 6", 6‴, 6"" et/ou ledit second moyen RFID 6, 6', 6", 6‴, 6"" est conçu pour transmettre des secondes informations 20 audit premier moyen RFID 5. Lesdites premières et/ou secondes informations 10, 20 sont par exemple relatives au marquage par micropercussion de ladite machine de marquage 2, directement (données de marquage, données de paramétrage, etc.) ou indirectement (autorisation, sécurité, configuration de connexion sans fil Wi-Fi^{™}, etc.), comme on le verra ci-après. Bien entendu, de façon avantageuse, ledit premier moyen RFID 5 est conçu pour recevoir (par exemple, lire et/ou enregistrer) lesdites secondes informations 20 en provenance dudit second moyen RFID 6, 6', 6", 6‴, 6"" et/ou ledit second moyen RFID 6, 6', 6", 6‴, 6ʺʺ est conçu pour recevoir (par exemple, lire et/ou enregistrer) lesdites premières informations 10 en provenance dudit premier moyen RFID 5. Ainsi, de façon avantageuse, ledit lecteur RFID est conçu pour lire ladite étiquette RFID de façon à recevoir de cette dernière des données d'étiquette RFID. Par exemple, ledit premier moyen RFID 5 est un lecteur RFID intégrée à ladite machine de marquage 2, et ledit second moyen RFID 6, 6', 6", 6‴, 6"" est une étiquette RFID intégrée audit dispositif distinct 7, 7', 7", 7‴, 7ʺʺ, le système de marquage 1 étant conçu pour que lorsqu'un opérateur passe ledit premier moyen RFID 5 à proximité (de préférence quelques centimètres, à une distance de transmission) dudit second moyen RFID 6, 6', 6", 6‴, 6"" de façon à ce que le lecteur RFID (le premier moyen RFID 5) lise ladite étiquette RFID (le second moyen RFID 6, 6', 6", 6‴, 6ʺʺ) pour que lesdites secondes informations 20 contenues dans ladite étiquette RFID soient captées par ledit lecteur RFID, c'est-à-dire transmises audit lecteur RFID, ce dernier transmettant ensuite avantageusement lesdites secondes informations 20 à ladite tête de marquage 3.

Ladite étiquette RFID est préférentiellement conçue pour stocker lesdites données d'étiquette RFID, qui sont par exemple :
- préenregistrées (par exemple des données de paramétrage ou de marquage),
- en provenance de l'environnement (par exemple la température),
- et/ou en provenance dudit lecteur RFID (étiquette à écriture notamment),
et les retransmettre audit lecteur RFID, lesdites données d'étiquette RFID étant formées par lesdites premières informations 10 et/ou lesdites secondes informations 20.

Ladite étiquette RFID peut être de passive, semi-passive ou active (c'est-à-dire avec une réserve d'énergie du genre batterie). Elle peut être de type à écriture, c'est-à-dire que le système de marquage 1 peut être conçu de manière à ce que ledit lecteur RFID est capable de communiquer des données d'écriture au sein de ladite étiquette RFID qui les enregistre, lesdites données d'écriture étant de préférence formées par lesdites premières et/ou secondes données 10, 20.

De façon avantageuse, lesdits premier et second moyens RFID 5, 6, 6', 6", 6‴, 6ʺʺ sont conçus pour être amenés à proximité l'un de l'autre, de préférence à une distance de transmission égale ou inférieure à une distance prédéterminée, de manière à réaliser ladite transmission desdites premières et/ou secondes informations 10, 20. Ainsi, pour effectuer cette transmission desdites premières et/ou secondes informations 10, 20, c'est-à-dire en d'autres termes pour établir une communication entre lesdits premier et second moyens RFID 5, 6, 6', 6", 6‴, 6ʺʺ à l'aide de la technologie RFID, il est de préférence nécessaire de rapprocher lesdits premier et second moyens RFID 5, 6, 6', 6", 6‴, 6ʺʺ à une distance relativement faible l'un de l'autre formée par ladite distance de transmission. Cette dernière est préférentiellement inférieure à 1 m, plus avantageusement inférieure à 50 cm, encore plus avantageusement inférieure à 30 cm, et encore plus avantageusement égale ou inférieure à 20 cm. En d'autres termes, ladite distance prédéterminée ou distance de transmission limite est préférentiellement égale à 1 m, plus avantageusement égale à 50 cm, encore plus avantageusement égale à 30 cm, et encore plus avantageusement égale à 20 cm, la distance de transmission se situant avantageusement entre une distance nulle et ladite distance prédéterminée (incluse ou non).

De façon avantageuse, lesdits premier et second moyens RFID 5, 6, 6', 6", 6‴, 6ʺʺ sont conçus pour se reconnaître l'un et l'autre, l'étiquette RFID étant par exemple conçue pour reconnaître une onde de lecture émise par ledit lecteur RFID et émettre une onde de réponse, ladite onde de réponse étant captée (ou « *lue* ») par ledit lecteur RFID. Plus avantageusement, lesdits premier et second moyens RFID 5, 6, 6', 6", 6‴, 6ʺʺ sont conçus pour s'appairer l'un avec l'autre, en particulier lorsqu'ils sont amenés à ladite distance de transmission l'un de l'autre.

Selon un premier mode de réalisation, illustré à gauche de la figure 1, ledit système de marquage 1 comprend un dispositif de liaison sans fil équipant ladite machine de marquage 2, ledit dispositif de liaison sans fil étant avantageusement distinct dudit premier moyen RFID 5. Dans ce mode de réalisation, les premier et second moyens RFID 5, 6 sont avantageusement conçus pour, notamment lorsqu'ils sont amenés à ladite distance de transmission l'un de l'autre, configurer automatiquement, grâce à la transmission par RFID desdites premières et/ou secondes informations 10, 20, une connexion sans fil 15 entre une borne de connexion sans fil 9, par exemple solidaire dudit dispositif distinct 7 comme illustré à la figure 1, et ladite machine de marquage 2, via ledit dispositif de liaison sans fil. Ledit système de marquage 1 comprend donc avantageusement ladite borne de connexion sans fil 9, c'est-à-dire qu'il comprend une borne de connexion sans fil 9 pour réaliser une connexion sans fil 15 (de préférence une connexion radio, par exemple de type Wi-Fi^{™} ou autre standard approprié) avec ledit dispositif de liaison sans fil de ladite machine de marquage 2, ladite connexion sans fil 15 étant préférentiellement configurée grâce à l'appairage desdits premier et second moyens RFID 5, 6, bien qu'elle puisse alternativement être réalisée autrement.

De préférence, dans ce premier mode de réalisation, ladite connexion sans fil 15 est une connexion radio, en particulier une connexion de type Wi-Fi^{™}, ledit dispositif de liaison sans fil étant donc conçu pour se connecter via radiocommunication, et notamment via Wi-Fi^{™} ou éventuellement Bluetooth^{™}, à ladite borne de connexion sans fil 9, qui est alors une borne de connexion sans fil radio (et en particulier plus précisément Wi-Fi^{™} ou autre standard approprié) Le système de marquage 1 est de préférence conçu pour configurer automatiquement, grâce à l'appairage desdits premier et second moyens RFID 5, 6, une connexion sans fil 15, de préférence Wi-Fi^{™}, entre ladite borne de connexion sans fil 9, incluant optionnellement un boîtier de commande 8, et ledit dispositif de liaison sans fil. Ladite connexion sans fil 15 est de façon avantageuse une connexion fonctionnant à une distance relativement longue par rapport à la distance de transmission, c'est-à-dire que ladite communication sans fil 15 peut par exemple s'étendre sur quelques mètres ou plus (en particulier entre 0 et 20 mètres), quelques dizaines de mètres ou plus (entre 0 et 100 mètres, notamment), voire quelques centaines de mètres ou plus (entre 0 et 600 mètres, voire plus). En résumé, dans ce premier mode de réalisation, le système de marquage 1 est avantageusement conçu pour autoriser la réalisation d'une connexion sans fil 15 qui est de préférence « *longue distance* » (par exemple quelques mètres à quelques dizaines de mètres) et d'un type différent d'une liaison RFID (par exemple Wi-Fi^{™} ou Bluetooth^{™}), à partir de la réalisation préalable d'une connexion RFID préférentiellement « *courte distance* » (par exemple quelques centimètres à un ou deux mètres) entre lesdits premier et second moyens RFID 5, 6. Une telle configuration est particulièrement avantageuse dans le domaine du marquage par micropercussion, car elle permet par exemple, en minimisant le risque d'erreur (doublons non désirés, faux numéros, appairage erroné, etc.), d'appairer une ou plusieurs machines de marquage par micropercussion 2 à un même « *spot Wi-Fi^{™}* » (permettant la connexion sans fil 15 « *longue distance* ») via un appairage RFID « *courte distance* » entre le premier moyen RFID 5 de chaque machine de marquage 2 et ledit second moyen RFID 6 équipant le dispositif distinct 7, ce dernier pouvant éventuellement être à proximité immédiate de la borne de connexion sans fil 9 voire connecté à elle. Optionnellement, les premier et second moyens RFID 5, 6 sont conçus, lorsqu'ils sont ramenés à distance de transmission l'un de l'autre, pour désactiver automatiquement la connexion sans fil 15. Alternativement, le système de marquage 1 comprend ledit second moyen RFID 6, conçu spécifiquement pour configurer ladite connexion sans fil 15 lorsqu'il est amené à distance de transmission du premier moyen RFID 5 comme mentionné ci-avant, et un autre second moyen RFID 6 distinct du précédent et conçu spécifiquement pour désactiver ladite connexion sans fil 15 lorsqu'il est amené à distance de transmission du premier moyen RFID 5.

Selon un mode de réalisation particulier, le système de marquage 1 comprend une pluralité de machines de marquage 2, chacune étant équipée d'un premier moyen RFID 5 respectif (qui est de préférence tel que mentionné précédemment et ci-après) conçu pour communiquer lesdites premières et/ou secondes informations 10, 20 avec ledit second moyen RFID 6, lequel est donc avantageusement conçu pour communiquer avec plusieurs premiers moyens RFID 5.

Ledit système de marquage 1 comprend de préférence au moins un boîtier de commande 8, ce dernier étant avantageusement relié à ladite borne de connexion sans fil 9, en particulier par une liaison sans fil ou filaire, l'ensemble formé par ledit boîtier de commande 8 et ladite borne de connexion sans fil 9 formant par exemple ledit dispositif distinct 7, comme illustré à la figure 1. En d'autres termes, ledit second moyen RFID 6 équipe de préférence la borne de connexion 9 et/ou une structure reliée à cette borne 9, ladite structure étant par exemple ledit boîtier de commande 8. Ce dernier peut donc éventuellement être lui-même équipé dudit second moyen RFID 6 et former en tout ou en partie ledit dispositif distinct 7. Ledit boîtier de commande 8 est préférentiellement conçu pour pouvoir donner des instructions de marquage à ladite machine de marquage 2, et ce via ladite borne de connexion sans fil 9, ladite connexion sans fil 15 (de préférence une connexion radio, notamment de type Wi-Fi^{™} comme on l'a vu, mais qui peut aussi être de type Bluetooth^{™}, etc.) et ledit dispositif de liaison sans fil. Ledit dispositif de liaison sans fil est de préférence embarqué par, intégré à et/ou fixé sur ladite machine de marquage 2, et permet donc d'établir ladite connexion sans fil 15, de préférence entre la tête de marquage 3 et ledit boîtier de commande 8 via ladite borne de connexion sans fil 9 pour donner des instructions de marquage audit poinçon mobile 4. Cette configuration trouve son intérêt dans la facilité qu'elle apporte pour configurer automatiquement une connexion sans fil 15 entre ladite machine de marquage 2 et ladite borne de connexion sans fil 9, ce qui peut d'ailleurs constituer en tant que tel une invention à part entière.

De préférence, le terme Wi-Fi^{™} désigne ici des protocoles de communication sans fil régis par les normes du groupe IEEE 802.11 (IEEE désignant en particulier l'Institut des ingénieurs électriciens et électroniciens).

Selon un deuxième mode de réalisation, réalisable en parallèle ou en combinaison avec le premier mode décrit ci-avant, lesdites premières informations 10 et/ou lesdites secondes informations 20 comprennent de préférence au moins des données de marquage. Ainsi, dans ce dernier mode, ledit signe est de manière avantageuse issu desdites secondes informations 20. Par exemple, comme illustré à la figure 1, le dispositif distinct 7' comprend un support de suivi 11 intégrant le second moyen RFID 6' qui est préférentiellement une étiquette RFID, ledit support de suivi 11 permettant de présenter des données de marquage spécifiques (formant lesdites secondes données 20) pour chaque pièce à marquer de manière à ce qu'elles soient transmises dudit second moyen RFID 6' audit premier moyen RFID 5 pour être transcrites en tant qu'instructions de marquage à ladite machine de marquage 2 et plus précisément à ladite tête de marquage 3. Ledit support de suivi 11 peut notamment être formé par une fiche suiveuse ou alternativement par une pièce à marquer sur ou au sein de laquelle est disposée ledit second moyen RFID. Préférentiellement formé d'une étiquette RFID. Cette configuration permet en l'espèce une « *lecture directe* » des informations du second moyen RFID par le premier moyen RFID (qui est alors préférentiellement un lecteur RFID) pour le marquage « *direct* » des pièces à marquer, les données de marquage étant en particulier issues *« directement* » desdites secondes informations 20, notamment sans configuration de connexion sans fil par radiocommunication en particulier de type Wi-Fi^{™}, comme dans le premier mode de réalisation.

Selon l'invention, lesdites premières informations 10 et/ou lesdites secondes informations 20 comprennent au moins des données de paramétrage de ladite machine de marquage 2. Par exemple, dans ce mode, le dispositif distinct 7" comprend avantageusement un badge de configuration 12 permettant de paramétrer ladite machine de marquage 2 via lesdites secondes informations 20. Ledit badge de configuration 12 est avantageusement conçu pour être présenté à ladite distance de transmission pour que le second moyen RFID 6", préférentiellement intégré audit badge de configuration 12, transmette lesdites secondes informations 20 audit premier moyen RFID 5, de façon que ladite machine de marquage 2 modifient ses paramètres de marquage selon lesdites données de paramétrage contenues dans lesdites secondes informations 20. Les paramètres de marquage de ladite machine 2 et/ou les données de paramétrage contenues dans ledit badge de configuration 12 peuvent par exemple concerner la taille et nature des polices de marquage, la force d'application du poinçon mobile 4, une information concernant le matériau à marquer, la vitesse de marquage, l'espacement des micropercussions, etc. Cette configuration est particulièrement utile pour configurer automatiquement les paramètres de marquage d'une machine de marquage 2, sans recourir à l'intervention manuelle d'un opérateur par exemple sur un boîtier de commande.

Selon un quatrième mode de réalisation, réalisable en parallèle ou en combinaison avec les modes décrits ci-avant, le dispositif distinct 7'" comprend un badge d'identification 13 spécifique à l'identité d'un opérateur, lesdites secondes informations 20 étant propres à ce dernier, comme illustré schématiquement à la figure 1. Par exemple, ledit badge d'identification 13 comprend, comme secondes informations 20, des informations d'autorisation de marquage, qui, lorsqu'elles sont transmises dudit second moyen RFID 6‴ audit premier moyen RFID 5, permettant d'autoriser ou non une opération de marquage selon l'habilitation de l'opérateur. En d'autres termes, ledit badge d'identification 13 permet par exemple d'autoriser ou d'interdire à un opérateur de procéder à une certaine opération de marquage. Cette configuration est particulièrement avantageuse lorsqu'il s'agit de faire réaliser ou d'autoriser un marquage par micropercussion particulier par un opérateur qualifié. Le badge d'identification 13, et plus globalement le système de marquage 1 de l'invention, permet ainsi, de manière avantageuse, de personnaliser la mise en oeuvre de la machine de marquage 2, en adaptant selon le profil de l'opérateur, son habilitation et/ou sa fonction les paramètres de marquage et/ou les données de marquage à transmettre à la machine de marquage 2 via RFID.

Alternativement, ou en combinaison avec ce qui précède, le dispositif distinct 7, 7', 7", 7‴, 7ʺʺ comprend un badge de zone, dans lequel le second moyen RFID 6, 6', 6", 6‴, 6ʺʺ comprend des secondes informations 20 qui, lorsqu'elles sont transmises audit premier moyen RFID 5, entraînent une action de zone de la part de ladite machine de marquage 2, comme une alarme ou une désactivation. La réactivation peut par exemple être réalisée à l'aide dudit badge d'identification 13. Cette configuration est notamment utile pour éviter le vol d'une machine de marquage 2 ou tout simplement une utilisation non appropriée de la machine 2 par exemple dans une zone non dédiée au marquage. Selon un cinquième mode de réalisation, réalisable en parallèle ou en combinaison avec les modes décrits ci-avant, le système de marquage 1 comprend un ou plusieurs accessoires 14 spécifiques, chaque accessoire 14 étant destiné à équiper ladite machine de marquage 2 par micropercussion pour lui apporter une fonctionnalité respective relative au marquage. Ainsi, selon ce cinquième mode, ledit accessoire de marquage 14 forme le dispositif distinct 7ʺʺ et est destiné à équiper ladite machine de marquage 2 de manière amovible. Le second moyen RFID 6ʺʺ est monté sur ledit ou au sein dudit accessoire de marquage 14 de manière à transmettre lesdites données de paramétrage à ladite machine de marquage 2 via ledit premier moyen RFID 5, lesdites données de paramétrage étant spécifiques audit accessoire 14. Bien évidemment, les données de paramétrage forment avantageusement une partie au moins desdites secondes informations 20. Par exemple, ledit accessoire de marquage 14 amovible est formé par un poinçon mobile 4. Dans ce cas-là, ledit accessoire de marquage 14 amovible est distinct de ladite machine de marquage 2 d'une part parce qu'il distinct de l'essentiel de ladite machine de marquage 2, c'est-à-dire qu'il comprend moins de 10% du poids total de cette dernière, et d'autre parce qu'il détachable (puisqu'amovible) de ladite machine de marquage 2. Par exemple, ledit second moyen RFID 6"" est intégré au sein de ou fixé sur ledit accessoire 14 amovible, ce dernier formant à la fois ledit poinçon mobile 4 destiné au marquage par micropercussion et ledit dispositif distinct 7"", et ledit accessoire 14 est alors conçu pour communiquer lesdites secondes informations 20 à la tête de marquage 3 de ladite machine de marquage 2 de façon à paramétrer cette dernière selon les données de paramétrage comprises dans lesdites secondes informations 20. Ce mode de réalisation permet de configurer automatiquement ladite machine de marquage 2 avec un accessoire de marquage 14, sans intervention d'un opérateur pour procéder au réglage.

Selon une alternative compatible avec les modes de réalisation précédemment décrits, notamment en combinaison, le système de marquage 1 comprend une pluralité de seconds moyens RFID 6, 6', 6", 6‴, 6ʺʺ équipant chacun un dispositif respectif distinct 7, 7', 7", 7‴, 7ʺʺ de ladite machine de marquage 2, le système de marquage 1 comprenant donc avantageusement une pluralité de dispositifs distincts 7, 7', 7", 7'", 7"". Selon cette alternative, ledit premier moyen RFID 5 est conçu pour pouvoir transmettre lesdites premières informations 10 à chaque second moyen RFID 6, 6', 6", 6‴, 6ʺʺ et/ou chaque second moyen RFID 6, 6', 6", 6‴, 6ʺʺ est conçu pour pouvoir transmettre des secondes informations 20 respectives audit premier moyen RFID 5. De façon avantageuse, au moins un premier 6 et un deuxième 6', 6", 6‴, 6ʺʺ desdits seconds moyens RFID 6, 6', 6", 6‴, 6ʺʺ sont conçus pour s'appairer l'un avec l'autre afin de transmettre des secondes informations 20 du premier 6', 6", 6'", 6"" desdits seconds moyens RFID 6, 6', 6", 6‴, 6ʺʺ au deuxième 6 desdits seconds moyens RFID 6, 6', 6", 6‴, 6ʺʺ, lequel est conçu pour pouvoir transmettre lesdites secondes informations 20 à ladite borne de connexion 9, elle-même étant conçue pour transmettre lesdites secondes informations 20 à ladite machine de marquage 2 via ladite connexion sans fil 15 de préférence de type Wi-Fi^{™} ou autre standard radio. De préférence, lesdits premier 6', 6", 6‴, 6ʺʺ et deuxième 6 desdits seconds moyens RFID 6, 6', 6", 6‴, 6ʺʺ équipent respectivement un premier 7', 7", 7'", 7"" et un deuxième 7 desdits dispositifs distincts 7, 7', 7", 7‴, 7ʺʺ, ledit premier dispositif distinct 7', 7", 7'", 7"" étant par exemple formé par ledit support de suivi 11, ledit badge de configuration 12, ledit badge d'identification 13, ou ledit badge de zone (ou même encore ledit accessoire 14), tandis que ledit deuxième dispositif distinct 7 est formé par ladite borne de connexion sans fil 9 elle-même ou une structure reliée à cette borne 9. Ainsi, il est par exemple possible, grâce à ce mode de réalisation, de configurer la machine de marquage 2 à l'aide du badge de configuration 12 directement en appairant le second moyen RFID 6" équipant le badge de configuration 12 avec le premier moyen RFID 5 équipant la machine de marquage 2, ou en appairant le second moyen RFID 6" équipant le badge de configuration 12 avec le second moyen RFID 6 équipant la borne de connexion sans fil 9 ou une structure (par exemple le boîtier de commande 8) reliée à cette borne 9, la borne de connexion sans fil 9 transmettant ensuite les secondes données 20 en provenance du badge de configuration 12 à la machine de marquage 2 via la connexion sans fil 15, de préférence de type Wi-Fi^{™}. Ce mode de réalisation est particulièrement avantageux, puisqu'il permet de réaliser une communication de données RFID « à *distance* » à la machine de marquage 2, sans forcément mettre lesdits premier et second moyens RFID 5, 6, 6', 6", 6‴, 6"" à distance de transmission l'un de l'autre via la connexion sans fil 15 notamment de type Wi-Fi^{™} et donc à longue distance comparée au RFID, c'est-à-dire sans rapprocher la machine de marquage 2 du dispositif distinct 7, 7', 7", 7‴, 7ʺʺ.

Selon un autre mode de réalisation encore, réalisable en parallèle ou en combinaison avec les modes décrits ci-avant, et non illustré ici, ledit dispositif distinct 7, 7', 7", 7'", 7"" est un boîtier de commande conçu pour générer des données de marquages et les transmettre audit second moyen RFID 6, 6', 6", 6‴, 6ʺʺ pour que ce dernier les retransmette à son tour audit premier moyen RFID 5 en tant que secondes informations 20.

L'invention concerne, selon un deuxième aspect, un procédé de fabrication d'un système de marquage 1 selon la revendication 10, comprenant au moins une machine de marquage par micropercussion 2 (préférentiellement telle que décrite ci-avant). Le procédé de fabrication vise donc avantageusement à la réalisation du système de marquage 1 décrit précédemment. Ainsi, de façon préférentielle, la description précédente concernant le système de marquage 1 s'applique donc également au procédé de fabrication de l'invention, et inversement.

Selon l'invention, le procédé de fabrication comprend :
- une première étape d'équipement d'une machine de marquage 2 avec un premier moyen RFID (identification par radiofréquence) 5,
- une seconde étape d'équipement d'un dispositif distinct 7, 7', 7", 7‴, 7ʺʺ de ladite machine de marquage 2 avec un second moyen RFID 6, 6', 6", 6'", 6ʺʺ,
ledit premier moyen RFID 5 étant conçu pour transmettre des premières informations 10 audit second moyen RFID 6, 6', 6", 6'", 6"" et/ou ledit second moyen RFID 6, 6', 6", 6'", 6"" étant conçu pour transmettre des secondes informations audit premier moyen RFID 5.

L'étape de transmission est de préférence réalisée lorsque lesdits premier et second moyen RFID 5, 6, 6', 6", 6‴, 6ʺʺ sont positionnés par un opérateur à une distance de transmission, qui est de préférence celle déjà mentionnée ci-avant.

L'invention concerne, selon un troisième aspect et selon la revendication 11, un procédé de réglage d'une machine de marquage par micropercussion 2 de préférence telle que précédemment décrite. De préférence, le procédé de réglage est donc réalisé à l'aide d'un système de marquage 1 tel que décrit précédemment. Ainsi, de façon préférentielle, la description qui suit concernant le système de marquage 1 et/ou la machine de marquage 2 s'applique donc également au procédé de réglage de l'invention, et inversement.

Ainsi, selon l'invention, un premier moyen RFID (identification par radiofréquence) 5 équipe ladite machine de marquage 2, et un second moyen RFID 6, 6', 6", 6‴, 6ʺʺ équipe un dispositif distinct 7, 7', 7", 7‴, 7ʺʺ de ladite machine de marquage 2. Toujours selon l'invention, le procédé de réglage comprend :
- une étape de transmission de premières informations 10 dudit premier moyen RFID 5 audit second moyen RFID 6, 6', 6", 6‴, 6ʺʺ, et/ou
- une étape de transmission de secondes informations 20 dudit second moyen RFID 6, 6', 6", 6‴, 6ʺʺ audit premier moyen RFID 5.

Comme décrit précédemment, lesdites premières informations 10 et/ou lesdites secondes informations 20 comprennent au moins des données de paramétrage de ladite machine de marquage 2.

Selon un mode de réalisation particulier, le procédé de réglage comprend une étape de réalisation d'une connexion sans fil 15, celle-ci étant avantageusement différente d'une connexion RFID. Ainsi, ladite étape de réalisation comprend un rapprochement desdits premier et second moyens RFID 5, 6 de façon qu'ils soient amenés à distance de transmission l'un de l'autre pour configurer automatiquement, grâce à la transmission par RFID desdites premières et/ou secondes informations 10, 20, ladite connexion sans fil 15 entre une borne de connexion sans fil 9 et ladite machine de marquage 2 via un dispositif de liaison sans fil, ce dernier étant distinct dudit premier moyen RFID 5. La borne de connexion sans fil 9 peut ensuite avantageusement transférer des informations de marquage directement à ladite machine de marquage 2 via ladite connexion sans fil 15.

### POSSIBILITE D'APPLICATION INDUSTRIELLE

Le système 1 de l'invention, ainsi qu'avantageusement le procédé de fabrication et le procédé de réglage afférent, sont particulièrement adaptés pour réaliser, à l'aide d'au moins une machine de marquage, le marquage par micropercussion d'un certain nombre de composants industriels de manière sûre, flexible, rapide, et simple, tout en minimisant le risque de doublon, le risque d'erreur de marquage, le risque d'erreur manuelle d'un opérateur, et/ou le risque qu'un opérateur non habilité utilise la machine de marquage.

## Revendications

1. - Système de marquage (1) comprenant au moins une machine de marquage par micropercussion (2), **caractérisé en ce qu'**il comprend également :
- un premier moyen RFID (identification par radiofréquence) (5) équipant ladite machine de marquage (2),
- un second moyen RFID (6, 6', 6", 6‴, 6ʺʺ) équipant un dispositif distinct (7, 7', 7", 7‴, 7ʺʺ) de ladite machine de marquage (2),
ledit premier moyen RFID (5) étant conçu pour transmettre des premières informations (10) audit second moyen RFID (6, 6', 6", 6‴, 6ʺʺ) et/ou ledit second moyen RFID (6, 6', 6", 6‴, 6ʺʺ) étant conçu pour transmettre des secondes informations (20) audit premier moyen RFID (5), lesdites premières informations (10) et/ou lesdites secondes informations (20) comprenant au moins des données de paramétrage de ladite machine de marquage (2),
ledit système étant en outre **caractérisé en ce que** :
- soit ledit dispositif distinct (7") comprend un badge de configuration (12) permettant de paramétrer ladite machine de marquage (2) via lesdites secondes informations (20),
- soit ledit système comprend un ou plusieurs accessoires (14) spécifiques, chaque accessoire (14) étant destiné à équiper ladite machine de marquage par micropercussion (2) pour lui apporter une fonctionnalité respective relative au marquage, ledit accessoire de marquage (14) formant le dispositif distinct (7"") et étant destiné à équiper ladite machine de marquage (2) de manière amovible, ledit second moyen RFID (6"") étant monté sur ledit ou au sein dudit accessoire de marquage (14) de manière à transmettre lesdites données de paramétrage à ladite machine de marquage (2) via ledit premier moyen RFID (5), lesdites données de paramétrage étant spécifiques audit accessoire (14).

2. - Système de marquage (1) selon la revendication 1, **caractérisé en ce que** lesdits premier et second moyens RFID (5, 6, 6', 6", 6‴, 6ʺʺ) sont conçus pour être amenés à proximité l'un de l'autre à une distance de transmission égale ou inférieure à une distance prédéterminée de manière à réaliser ladite transmission desdites premières et/ou secondes informations (10, 20).

3. - Système de marquage (1) selon la revendication précédente, **caractérisé en ce qu'**il comprend un dispositif de liaison sans fil équipant ladite machine de marquage (2), ledit dispositif de liaison sans fil étant distinct dudit premier moyen RFID (5), lesdits premier et second moyens RFID (5, 6) étant conçus pour, lorsqu'ils sont amenés à ladite distance de transmission l'un de l'autre, configurer automatiquement, grâce à la transmission par RFID desdites premières et/ou secondes informations (10, 20), une connexion sans fil (15) entre une borne de connexion sans fil (9) et ladite machine de marquage (2) via ledit dispositif de liaison sans fil.

4. - Système de marquage (1) selon l'une quelconque des revendications précédentes, **caractérisé en ce que** lesdites premières informations (10) et/ou lesdites secondes informations (20) comprennent au moins des données de marquage.

5. - Système de marquage (1) selon la revendication précédente, **caractérisé en ce que** le dispositif distinct (7') comprend un support de suivi (11) intégrant le second moyen RFID (6') qui est une étiquette RFID, ledit support de suivi (11) permettant de présenter des données de marquage spécifiques pour chaque pièce à marquer de manière à ce qu'elles soient transmises dudit second moyen RFID (6') audit premier moyen RFID (5) pour être transcrites en tant qu'instructions de marquage à ladite machine de marquage (2).

6. - Système de marquage (1) selon l'une quelconque des revendications précédentes, **caractérisé en ce que** le dispositif distinct (7‴) comprend un badge d'identification (13) spécifique à l'identité d'un opérateur, lesdites secondes informations (20) étant propres à ce dernier.

7. - Système de marquage (1) selon l'une quelconque des revendications précédentes, **caractérisé en ce que** ledit dispositif distinct (7, 7', 7", 7‴, 7ʺʺ) est un boîtier de commande conçu pour générer des données de marquages et les transmettre audit second moyen RFID (6, 6', 6", 6'", 6"") pour que ce dernier les retransmette à son tour audit premier moyen RFID (5) en tant que secondes informations (20).

8. - Système de marquage (1) selon l'une quelconque des revendications précédentes, **caractérisé en ce que** ladite machine de marquage (2) comprend une tête de marquage (3) respective munie d'un poinçon mobile (4), lequel est destiné à percuter une pièce à marquer de manière à déformer cette dernière pour y inscrire au moins un signe, ledit signe étant issu desdites secondes informations (20).

9. - Système de marquage (1) selon l'une quelconque des revendications précédentes, **caractérisé en ce que** ledit premier moyen RFID (5) est une étiquette RFID, ledit second moyen RFID (6, 6', 6", 6‴, 6ʺʺ) étant un lecteur RFID, ou inversement **en ce que** ledit second moyen RFID (6, 6', 6", 6‴, 6ʺʺ) est une étiquette RFID, ledit premier moyen RFID (5) étant un lecteur RFID, ledit lecteur RFID étant conçu pour lire ladite étiquette RFID de façon à recevoir de cette dernière des données d'étiquette RFID, ladite étiquette RFID étant conçue pour stocker lesdites données d'étiquette RFID, qui sont :
- préenregistrées,
- en provenance de l'environnement,
- et/ou en provenance dudit lecteur RFID,
et les retransmettre audit lecteur RFID, lesdites données d'étiquette RFID étant formées par lesdites premières informations (10) et/ou lesdites secondes informations (20).

10. - Procédé de fabrication d'un système de marquage (1) comprenant au moins une machine de marquage par micropercussion (2), **caractérisé en ce qu'**il comprend :
- une première étape d'équipement d'une machine de marquage (2) avec un premier moyen RFID (identification par radiofréquence) (5),
- une seconde étape d'équipement d'un dispositif distinct (7, 7', 7", 7'", 7"") de ladite machine de marquage (2) avec un second moyen RFID (6, 6', 6", 6'", 6""),
ledit premier moyen RFID (5) étant conçu pour transmettre des premières informations (10) audit second moyen RFID (6, 6', 6", 6'", 6"") et/ou ledit second moyen RFID (6, 6', 6", 6'", 6"") étant conçu pour transmettre des secondes informations (20) audit premier moyen RFID (5), lesdites premières informations (10) et/ou lesdites secondes informations (20) comprenant au moins des données de paramétrage de ladite machine de marquage (2),
ledit procédé étant en outre **caractérisé en ce que** :
- soit ledit dispositif distinct (7") comprend un badge de configuration (12) permettant de paramétrer ladite machine de marquage (2) via lesdites secondes informations (20),
- soit ledit système (1) comprend un ou plusieurs accessoires (14) spécifiques, chaque accessoire (14) étant destiné à équiper ladite machine de marquage par micropercussion (2) pour lui apporter une fonctionnalité respective relative au marquage, ledit accessoire de marquage (14) formant le dispositif distinct (7"") et étant destiné à équiper ladite machine de marquage (2) de manière amovible, ledit second moyen RFID (6"") étant monté sur ledit ou au sein dudit accessoire de marquage (14) de manière à transmettre lesdites données de paramétrage à ladite machine de marquage (2) via ledit premier moyen RFID (5), lesdites données de paramétrage étant spécifiques audit accessoire (14).

11. - Procédé de réglage d'une machine de marquage par micropercussion (2), **caractérisé en ce qu'**un premier moyen RFID (identification par radiofréquence) (5) équipe ladite machine de marquage (2), un second moyen RFID équipant un dispositif distinct (7, 7', 7", 7‴, 7ʺʺ) de ladite machine de marquage (2), et **en ce qu'**il comprend :
- une étape de transmission de premières informations (10) dudit premier moyen RFID (5) audit second moyen RFID (6, 6', 6", 6‴, 6ʺʺ), et/ou
- une étape de transmission de secondes informations (20) dudit second moyen RFID (6, 6', 6", 6‴, 6ʺʺ) audit premier moyen RFID (5),
lesdites premières informations (10) et/ou lesdites secondes informations (20) comprenant au moins des données de paramétrage de ladite machine de marquage (2),
ledit procédé étant en outre **caractérisé en ce que** :
- soit ledit dispositif distinct (7") comprend un badge de configuration (12) permettant de paramétrer ladite machine de marquage (2) via lesdites secondes informations (20),
- soit ledit dispositif distinct (7"") est formé par un accessoire (14) spécifique destiné à équiper de manière amovible ladite machine de marquage par micropercussion (2) pour lui apporter une fonctionnalité respective relative au marquage, ledit second moyen RFID (6"") étant monté sur ledit ou au sein dudit accessoire de marquage (14) de manière à transmettre lesdites données de paramétrage à ladite machine de marquage (2) via ledit premier moyen RFID (5), lesdites données de paramétrage étant spécifiques audit accessoire (14).

## Patentansprüche

1. - Markierungssystem (1), das mindestens eine Mikroperkussions-Markierungsmaschine (2) umfasst, **dadurch gekennzeichnet, dass** es außerdem umfasst:
- ein erstes RFID (Radio Frequency Identification)-Mittel (5), mit dem die Markierungsmaschine (2) ausgestattet ist,
- ein zweites RFID-Mittel (6, 6', 6", 6""), das eine separate Vorrichtung (7, 7', 7", 7‴, 7ʺʺ) der Markierungsmaschine (2) ausstattet,
wobei das erste RFID-Mittel (5) dazu ausgelegt ist, erste Informationen (10) an das zweite RFID-Mittel (6, 6', 6", 6ʺʺ) zu übertragen und/oder das zweite RFID-Mittel (6, 6', 6", 6ʺʺ) dazu ausgelegt ist, zweite Informationen (20) an das erste RFID-Mittel (5) zu übertragen, wobei die ersten Informationen (10) und/oder die zweiten Informationen (20) mindestens Parametrierdaten der Markierungsmaschine (2) umfassen,
wobei das System ferner **dadurch gekennzeichnet ist, dass**:
- entweder die separate Vorrichtung (7") eine Konfigurationsmarke (12) umfasst, die es ermöglicht, die Markierungsmaschine (2) über die zweiten Informationen (20) zu parametrieren,
- oder das System ein oder mehrere spezifische Zubehörteile (14) umfasst, wobei jedes Zubehörteil (14) dazu bestimmt ist, die Mikroperkussions-Markierungsmaschine (2) auszustatten, um ihr eine jeweilige Funktionalität bezüglich der Markierung zu verleihen, wobei das Markierungszubehörteil (14) die separate Vorrichtung (7"") bildet und dazu bestimmt ist, die Markierungsmaschine (2) abnehmbar auszustatten, wobei das zweite RFID-Mittel (6"") an dem oder innerhalb des Markierungszubehörteils (14) angebracht ist, um die Parametrierdaten über das erste RFID-Mittel (5) an die Markierungsmaschine (2) zu übertragen, wobei die Parametrierdaten für das Zubehörteil (14) spezifisch sind.

2. - Markierungssystem (1) nach Anspruch 1, **dadurch gekennzeichnet, dass** die ersten und zweiten RFID-Mittel (5, 6, 6', 6", 6ʺʺ) so ausgelegt sind, dass sie mit einem Übertragungsabstand, der gleich oder kleiner als ein vorbestimmter Abstand ist, in die Nähe zueinander gebracht werden können, um die Übertragung der ersten und/oder zweiten Informationen (10, 20) zu bewirken.

3. - Markierungssystem (1) nach dem vorhergehenden Anspruch, **dadurch gekennzeichnet, dass** es eine drahtlose Verbindungsvorrichtung umfasst, mit der die Markierungsmaschine (2) ausgestattet ist, wobei die drahtlose Verbindungsvorrichtung von dem ersten RFID-Mittel (5) getrennt ist, wobei das erste und das zweite RFID-Mittel (5, 6) so ausgelegt sind, dass sie, wenn sie in den Übertragungsabstand zueinander gebracht werden, durch die RFID-Übertragung der ersten und/oder zweiten Informationen (10, 20) automatisch eine drahtlose Verbindung (15) zwischen einem drahtlosen Verbindungsanschluss (9) und der Markierungsmaschine (2) über die drahtlose Verbindungsvorrichtung konfigurieren.

4. - Markierungssystem (1) nach einem der vorhergehenden Ansprüche, **dadurch gekennzeichnet, dass** die ersten Informationen (10) und/oder die zweiten Informationen (20) mindestens Markierungsdaten umfassen.

5. - Markierungssystem (1) nach dem vorhergehenden Anspruch, **dadurch gekennzeichnet, dass** die separate Vorrichtung (7') einen Tracking-Träger (11) umfasst, der das zweite RFID-Mittel (6') integriert, das ein RFID-Tag ist, wobei der Tracking-Träger (11) es ermöglicht, spezifische Markierungsdaten für jedes zu markierende Teil zu präsentieren, so dass sie von dem zweiten RFID-Mittel (6') zu dem ersten RFID-Mittel (5) übertragen werden, um als Markierungsanweisungen an die Markierungsmaschine (2) transkribiert zu werden.

6. - Markierungssystem (1) nach einem der vorhergehenden Ansprüche, **dadurch gekennzeichnet, dass** die separate Vorrichtung (7‴) ein Identifikationsschild (13) umfasst, das spezifisch für die Identität eines Bedieners ist, wobei die zweiten Informationen (20) für den Bediener spezifisch sind.

7. - Markierungssystem (1) nach einem der vorhergehenden Ansprüche, **dadurch gekennzeichnet, dass** die separate Vorrichtung (7, 7', 7", 7‴, 7ʺʺ) eine Steuerbox ist, die dazu ausgelegt ist, Markierungsdaten zu erzeugen und sie an das zweite RFID-Mittel (6, 6', 6", 6‴, 6ʺʺ) zu übertragen, damit dieses sie wiederum als zweite Informationen (20) an das erste RFID-Mittel (5) weiterleitet.

8. - Markierungssystem (1) nach einem der vorhergehenden Ansprüche, **dadurch gekennzeichnet, dass** die Markierungsmaschine (2) einen jeweiligen Markierungskopf (3) umfasst, der mit einem beweglichen Stempel (4) versehen ist, der dazu bestimmt ist, ein zu markierendes Teil so zu durchschlagen, dass dieses verformt wird, um mindestens ein Zeichen einzuschreiben, wobei das Zeichen von den zweiten Informationen (20) abgeleitet ist.

9. - Markierungssystem (1) nach einem der vorhergehenden Ansprüche, **dadurch gekennzeichnet, dass** das erste RFID-Mittel (5) ein RFID-Tag ist, wobei das zweite RFID-Mittel (6, 6', 6‴, 6ʺʺ) ein RFID-Lesegerät ist, oder umgekehrt, dass das zweite RFID-Mittel (6, 6', 6‴, 6‴, 6ʺʺ) ein RFID-Tag ist, wobei das erste RFID-Mittel (5) ein RFID-Lesegerät ist, wobei das RFID-Lesegerät dazu ausgelegt ist, das RFID-Tag zu lesen, um von diesem RFID-Tag RFID-Tag-Daten zu empfangen, wobei das RFID-Tag dazu ausgelegt ist, die RFID-Tag-Daten zu speichern, die:
- voraufgezeichnet,
- aus der Umgebung stammend,
- und/oder von dem RFID-Lesegerät stammend sind,
und sie an das RFID-Lesegerät weiterzuleiten, wobei die RFID-Tag-Daten aus den ersten Informationen (10) und/oder den zweiten Informationen (20) gebildet werden.

10. - Verfahren zur Herstellung eines Markierungssystems (1), das mindestens eine Mikroperkussions-Markierungsmaschine (2) umfasst, **dadurch gekennzeichnet, dass** es Folgendes umfasst:
- einen ersten Schritt des Ausstattens einer Markierungsmaschine (2) mit einem ersten RFID (Radio Frequency Identification)-Mittel (5),
- einen zweiten Schritt des Ausstattens einer separaten Vorrichtung (7, 7', 7", 7‴, 7ʺʺ) der Markierungsmaschine (2) mit einem zweiten RFID-Mittel (6, 6', 6", 6‴, 6ʺʺ),
wobei das erste RFID-Mittel (5) dazu ausgelegt ist, erste Informationen (10) an das zweite RFID-Mittel (6, 6', 6", 6ʺʺ) zu übertragen und/oder das zweite RFID-Mittel (6, 6', 6", 6ʺʺ) dazu ausgelegt ist, zweite Informationen (20) an das erste RFID-Mittel (5) zu übertragen, wobei die ersten Informationen (10) und/oder die zweiten Informationen (20) mindestens Parametrierdaten der Markierungsmaschine (2) umfassen,
wobei das Verfahren ferner **dadurch gekennzeichnet ist, dass**:
- entweder die separate Vorrichtung (7") eine Konfigurationsmarke (12) umfasst, die es ermöglicht, die Markierungsmaschine (2) über die zweiten Informationen (20) zu parametrieren,
- oder das System (1) ein oder mehrere spezifische Zubehörteile (14) umfasst, wobei jedes Zubehörteil (14) dazu bestimmt ist, die Mikroperkussions-Markierungsmaschine (2) auszustatten, um ihr eine jeweilige Funktionalität in Bezug auf die Markierung zu verleihen, wobei das Markierungszubehörteil (14) die separate Vorrichtung (7ʺʺ) bildet und dazu bestimmt ist, die Markierungsmaschine (2) abnehmbar auszustatten, wobei das zweite RFID-Mittel (6"") an dem oder innerhalb des Markierungszubehörteils (14) angebracht ist, um die Parametrierdaten über das erste RFID-Mittel (5) an die Markierungsmaschine (2) zu übertragen, wobei die Parametrierdaten für das Zubehörteil (14) spezifisch sind.

11. - Verfahren zum Einstellen einer Mikroperkussions-Markierungsmaschine (2), **dadurch gekennzeichnet, dass** ein erstes RFID (Radio Frequency Identification)-Mittel (5) die Markierungsmaschine (2) ausstattet, wobei ein zweites RFID-Mittel eine separate Vorrichtung (7, 7', 7", 7‴, 7ʺʺ) der Markierungsmaschine (2) ausstattet, und dadurch, dass es Folgendes umfasst:
- einen Schritt zum Übertragen von ersten Informationen (10) von dem ersten RFID-Mittel (5) zu dem zweiten RFID-Mittel (6, 6', 6", 6""), und/oder
- einen Schritt zum Übertragen von zweiten Informationen (20) von dem zweiten RFID-Mittel (6, 6', 6", 6"', 6"") zu dem ersten RFID-Mittel (5),
wobei die ersten Informationen (10) und/oder die zweiten Informationen (20) mindestens Parametrierdaten der Markierungsmaschine (2) umfassen,
wobei das Verfahren ferner **dadurch gekennzeichnet ist, dass**:
- entweder die separate Vorrichtung (7") eine Konfigurationsmarke (12) umfasst, die es ermöglicht, die Markierungsmaschine (2) über die zweiten Informationen (20) zu parametrieren,
- oder die separate Vorrichtung (7ʺʺ) durch ein spezifisches Zubehörteil (14) gebildet wird, das dazu bestimmt ist, die Mikroperkussions-Markierungsmaschine (2) abnehmbar auszustatten, um ihr eine jeweilige Funktionalität in Bezug auf die Markierung zu verleihen, wobei das zweite RFID-Mittel (6"") an dem oder innerhalb des Markierungszubehörteils (14) derart angebracht ist, dass es die Parametrierdaten über das erste RFID-Mittel (5) an die Markierungsmaschine (2) überträgt, wobei die Parametrierdaten für das Zubehörteil (14) spezifisch sind.

## Claims

1. - A marking system (1) comprising at least one micro-percussion marking machine (2), **characterized in that** it also comprises:
- a first RFID (radio frequency identification) means (5) equipping said marking machine (2),
- a second RFID means (6, 6', 6", 6‴, 6ʺʺ) equipping a separate device (7, 7', 7", 7‴, 7ʺʺ) of said marking machine (2),
said first RFID means (5) being adapted to transmit first information (10) to said second RFID means (6, 6', 6", 6‴, 6ʺʺ) and/or said second RFID means (6, 6', 6", 6‴, 6ʺʺ) being adapted to transmit second information (20) to said first RFID means (5), said first information (10) and/or said second information (20) comprising at least parameter data of said marking machine (2),
said system being further **characterized in that**:
- either said separate device (7") comprises a configuration badge (12) making it possible to configure said marking machine (2) via said second information (20),
- or said system comprises one or more specific accessories (14), each accessory (14) being intended to equip said micro-percussion marking machine (2) to provide it with a respective functionality relating to marking, said marking accessory (14) forming the separate device (7"") and being intended to equip said marking machine (2) in a removable manner, the second RFID means (6"") being mounted on said or within said marking accessory (14) so as to transmit said parameter data to said marking machine (2) via said first RFID means (5), said parameter data being specific to said accessory (14).

2. - The marking system (1) according to claim 1, **characterized in that** said first and second RFID means (5, 6, 6', 6", 6‴, 6ʺʺ) are designed to be brought into proximity to each other at a transmission distance equal to or less than a predetermined distance so as to effect said transmission of said first and/or second information (10, 20).

3. - The marking system (1) according to the preceding claim, **characterized in that** it comprises a wireless connection device equipping said marking machine (2), said wireless connection device being separate from said first RFID means (5), said first and second RFID means (5, 6) being adapted to, when brought to said transmission distance from each other, automatically configure, by means of RFID transmission of said first and/or second information (10, 20), a wireless connection (15) between a wireless connection terminal (9) and said marking machine (2) via said wireless link device.

4. - The marking system (1) according to any one of the preceding claims, **characterized in that** said first information (10) and/or said second information (20) comprises at least marking data.

5. - The marking system (1) according to the preceding claim, **characterized in that** the separate device (7') comprises a tracking support (11) incorporating the second RFID means (6') which is an RFID tag, said tracking support (11) making it possible to present specific marking data for each part to be marked so that they are transmitted from said second RFID means (6') to said first RFID means (5) to be transcribed as instructions of marking to said marking machine (2).

6. - The marking system (1) according to any one of the preceding claims, **characterized in that** the separate device (7"') comprises an identification badge (13) specific to the identity of an operator, said second information (20) being specific to the latter.

7. - The marking system (1) according to any one of the preceding claims, **characterized in that** said separate device (7, 7', 7", 7‴, 7ʺʺ) is a control unit designed to generate marking data and transmit them to said second RFID means (6, 6', 6", 6‴, 6ʺʺ) so that the latter in turn retransmits them to said first RFID means (5) as second information (20).

8. - The marking system (1) according to any one of the preceding claims, **characterized in that** said marking machine (2) comprises a respective marking head (3) provided with a movable punch (4), which is intended to strike a part to be marked so as to deform the latter in order to register at least one sign therein, said sign coming from said second information (20).

9. - The marking system (1) according to any one of the preceding claims, **characterized in that** said first RFID means (5) is an RFID tag, said second RFID means (6, 6', 6", 6‴, 6ʺʺ) being an RFID reader, or vice versa **in that** said second RFID means (6, 6', 6", 6‴, 6ʺʺ) is an RFID tag, said first RFID means (5) being an RFID reader, said RFID reader being designed to read said RFID tag so as to receive RFID tag data from the latter, said RFID tag being designed to store said RFID tag data, which are:
- pre-recorded,
- coming from the environment,
- and/or coming from said RFID reader,
and retransmitting them to said RFID reader, said RFID tag data being formed by said first information (10) and/or said second information (20).

10. - A method for manufacturing a marking system (1) comprising at least one micro-percussion marking machine (2), **characterized in that** it comprises:
- a first step of equipping a marking machine (2) with a first RFID (radio frequency identification) means (5),
- a second step of equipping a separate device (7, 7', 7", 7‴, 7ʺʺ) of said marking machine (2) with a second RFID means (6, 6', 6", 6'", 6""),
said first RFID means (5) being adapted to transmit first information (10) to said second RFID means (6, 6', 6", 6‴, 6ʺʺ) and/or said second RFID means (6, 6', 6", 6‴, 6ʺʺ) being adapted to transmit second information (20) to said first RFID means (5), said first information (10) and/or said second information (20) comprising at least parameter data of said marking machine (2),
said method being further **characterized in that** :
- either said separate device (7") comprises a configuration badge (12) making it possible to configure said marking machine (2) via said second information (20),
- or said system (1) comprises one or more specific accessories (14), each accessory (14) being intended to equip said micro-percussion marking machine (2) to provide it with a respective functionality relating to marking, said marking accessory (14) forming the separate device (7"") and being intended to equip said marking machine (2) in a removable manner, the second RFID means (6"") being mounted on said or within said marking accessory (14) so as to transmit said parameter data to said marking machine (2) via said first RFID means (5), said parameter data being specific to said accessory (14).

11. - A method for adjusting a micro-percussion marking machine (2), **characterized in that** a first RFID (radio frequency identification) means (5) equips said marking machine (2), a second RFID means equipping a device separate (7, 7', 7", 7‴, 7ʺʺ) from said marking machine (2), and **in that** it comprises:
- a step of transmitting first information (10) from said first RFID means (5) to said second RFID means (6, 6 ", 6", 6 ", 6" "), and/or
- a step of transmitting second information (20) from said second RFID means (6, 6 ", 6", 6 "", 6 "") to said first RFID means (5),
said first information (10) and/or said second information (20) comprising at least parameter data of said marking machine (2),
said method being further **characterized in that**:
- either said separate device (7") comprises a configuration badge (12) making it possible to configure said marking machine (2) via said second information (20),
- or said separate device (7") is formed by a specific accessory (14) intended to equip said micro-percussion marking machine (2) in a removable manner to provide it with a respective functionality relating to marking, the second RFID means (6"") being mounted on said or within said marking accessory (14) so as to transmit said parameter data to said marking machine (2) via said first RFID means (5), said parameter data being specific to said accessory (14).
